# EUROPÄISCHE PATENTSCHRIFT

(11) **EP 1 375 411 B1**
(45) Veröffentlichungstag und Bekanntmachung des Hinweises auf die Patenterteilung: **19.03.2008**
(21) Anmeldenummer: 03012623.9
(22) Anmeldetag: 03.06.2003
(51) Int. Cl.: B66F 9/075, B62D 33/06, B60N 2/50

(54) **Flurförderzeug mit einem gedämpften Fahrerplatz**
Industrial truck with a damped driver's seat
Chariot de manutention avec un siège de conducteur amorti

(30) Priorität: 26.06.2002 DE 10228631
(43) Veröffentlichungstag der Anmeldung: 02.01.2004
(73) Patentinhaber: STILL WAGNER GmbH, 72766 Reutlingen-Mittelstadt (DE)
(72) Erfinder: Ruck, Armin, 72124 Pliezhausen (DE)
(74) Vertreter: Geirhos, Johann

(56) Entgegenhaltungen:
- WO-A-91/04221
- DE-A- 4 413 630
- FR-A- 1 558 324
- GB-A- 1 440 686
- US-A- 4 047 759
- US-A- 5 579 859

## Beschreibung

Die Erfindung betrifft einen Schubmaststapler mit einem Fahrzeugrahmen, welcher zwei Radarme und ein Fahrerschutzdach umfasst, und mit einem zumindest eine Bodenplatte und einen Fahrersitz umfassenden Fahrerplatz, wobei die Bodenplatte und der Fahrersitz relativ zu dem Fahrzeugrahmen gefedert sind.

Schubmaststapler dieser Art weisen häufig einen gefederten Fahrersitz auf. Die Federung des Fahrersitzes verhindert, dass auf den Fahrzeugrahmen wirkende Stöße oder Schwingungen, wie sie beispielsweise infolge von Fahrbahnunebenheiten auftreten können, nicht oder nicht vollständig auf den sitzenden Fahrer übertragen werden. Der gefederte Fahrersitz ist dabei mit einem nicht gefederten Bauteil starr mit dem Fahrzeugrahmen verbunden. Eine Bodenplatte, auf der der sitzende Fahrer seine Füße aufstellt und auf der er während einer Bedienung des Schubmaststaplers in stehender Körperhaltung steht, ist bei bekannten Schubmaststaplern häufig ebenfalls relativ zu dem Fahrzeugrahmen gefedert. Die Federung der Bodenplatte erfolgt dabei stets unabhängig von der Federung des Fahrersitzes. Die mit der Bodenplatte zu federnde Masse variiert stark in Abhängigkeit davon, ob der Fahrer sitzt und lediglich seine Beine auf der Bodenplatte abstützt, oder ob er mit seinem ganzen Körpergewicht auf der Bodenplatte steht. Die mögliche Relativbewegung zwischen Fahrersitz und Bodenplatte kann die Ergonomie des Fahrerplatzes negativ beeinflussen. Die maximalen Federwege des Fahrersitzes und der Bodenplatte sind deshalb auf einen geringeren Wert eingestellt, als es im Hinblick auf eine optimale Federung und Dämpfung des Fahrerplatzes wünschenswert wäre.

Aus der WO 91/04221 A ist ein nicht gattungsgemäßer Gegengewichtsgabelstapler bekannt, bei dem eine komplette Fahrerkabine, welche eine Kabinenkarosserie und ein Fahrerschutzdach umfasst, beweglich am Fahrzeugrahmen gelagert ist.

Der Erfindung liegt daher die Aufgabe zugrunde, einen ergonomisch optimierten Schubmaststapler mit einem gedämpften Fahrerplatz zur Verfügung zu stellen.

Diese Aufgabe wird erfindungsgemäß dadurch gelöst, dass die Bodenplatte und der Fahrersitz an einem Zwischenrahmen befestigt sind, der relativ zu dem Fahrzeugrahmen bewegbar gelagert ist, wobei mindestens ein Federelement und/oder mindestens ein Dämpfungselement vorgesehen ist, das den Zwischenrahmen mit dem Fahrzeugrahmen verbindet. Mittels des Zwischenrahmens sind der Fahrersitz und die Bodenplatte miteinander verbunden und gemeinsam beweglich an dem Fahrzeugrahmen gelagert. Eine Ausgleichsbewegung der Bodenplatte mittels des Feder- und/oder Dämpfungselements wird hierdurch stets auch auf den Fahrersitz übertragen, so dass sich infolge einer solchen Ausgleichsbewegung die Position der Bodenplatte relativ zu einer Befestigungsstelle des Fahrersitzes nicht verändert. Die Bodenplatte und die an der Bodenplatte angeordneten Pedale bleiben hierdurch stets in optimaler Position relativ zu dem Fahrersitz. Die Federung und Dämpfung des Zwischenrahmens kann gezielt für die typischen Einsatzbedingungen des Schubmaststaplers ausgelegt werden. Abgesehen von den unterschiedlichen Körpergewichten verschiedener Fahrer bleibt die zu dämpfende Masse unabhängig von der Betriebssituation des Schubmaststaplers stets gleich.

Weitere ergonomisch vorteilhafte Effekte ergeben sich, wenn der Fahrersitz gefedert an dem Zwischenrahmen gelagert ist. Es kann hierbei ein handelsüblicher gefederter Sitz verwendet werden. Der Federweg dieses Sitzes kann im Vergleich zu den Schubmaststaplern des Standes der Technik relativ gering sein, da ein Großteil der auf den Fahrzeugrahmen wirkenden Stößen und Schwingungen bereits durch die bewegliche Lagerung des Zwischenrahmens kompensiert wird.

Gemäß einer Ausgestaltung der Erfindung ist mindestens ein translatorisches Führungselement vorgesehen, das den Zwischenrahmen mit dem Fahrzeugrahmen verbindet. Mit den translatorischen Führungselementen können die gewünschten Bewegungsrichtungen des Zwischenrahmens relativ zu dem Fahrzeugrahmen genau definiert werden.

Es kann beispielsweise gewünscht sein, dass der Zwischenrahmen relativ zu dem Fahrzeugrahmen in genau einer Richtung translatorisch bewegbar ist. Alle anderen Bewegungsrichtungen sind dann verhindert, beispielsweise durch das translatorische Führungselement.

Bevorzugt ist der Zwischenrahmen relativ zu dem Fahrzeugrahmen ausschließlich in vertikaler Richtung bewegbar. Eine Dämpfung und Federung von Stößen findet damit ausschließlich ich Gravitationsrichtung statt. Eine horizontale Bewegung des Zwischenrahmens relativ zu dem Fahrzeugrahmen findet nicht statt.

Gemäß einer besonders einfachen Ausführungsform ist als translatorisches Führungselement mindestens eine in einem Profil geführte Rolle vorgesehen. Hierfür können die gleichen beispielsweise U-förmigen Profile verwendet werden, wie sie beim Bau von Schubmaststaplern auch für Hubgerüste verwendet werden.

Wenn drei zueinander parallel angeordnete Profile vorgesehen sind, wobei in jedem Profil mindestens eine Rolle geführt ist, kann jegliche Translations- und Rotationsbewegung in der Ebene senkrecht zu den Profilen verhindert werden. Mindestens zwei der drei Profile müssen dabei deutlich voneinander beabstandet sein.

Gemäß einer zweckmäßigen Weiterbildung der Erfindung ist die Position des Fahrersitzes und/oder der Bodenplatte relativ zu dem Zwischenrahmen verstellbar. Die Positionen von Fahrersitz und Bodenplatte können dabei an die jeweiligen Gegebenheiten, insbesondere an die Körpergröße des Fahrers angepasst werden. Die Federung und Dämpfung des Zwischenrahmens und damit auch des Fahrersitzes und der Bodenplatte relativ zu dem Fahrzeugrahmen werden dadurch nicht beeinflusst.

Die gute Ergonomie des Fahrerplatzes kann automatisch sichergestellt werden, wenn die Position des Fahrersitzes und der Bodenplatte relativ zu dem Zwischenrahmen verstellbar ist, wobei eine Höhenverstellung der Bodenplatte an ein Verschieben des Fahrersitzes gekoppelt ist.

Hierbei ist es besonders zweckmäßig, wenn zum Verstellen des Fahrersitzes eine von vorne-oben nach hinten-unten gerichtete Führung vorgesehen ist. Eine derartige Vorrichtung zum gleichzeitigen Verstellen von Fahrersitz und Bodenplatte ist in der DE 44 13 630 A1 beschrieben.

Für die Federung des Zwischenrahmens relativ zu dem Fahrzeugrahmens ergibt sich ein besonders einfacher Aufbau, wenn als Federelement mindestens eine metallische Schraubenfeder vorgesehen ist.

Die Dämpfung des Zwischenrahmens wird mit besonders einfachen Mitteln erzielt, wenn als Dämpfungselement mindestens ein hydraulischer Dämpfer vorgesehen ist. Die Kombination von metallischen Schraubenfedern mit hydraulischen Dämpfern stellt eine beispielsweise im Automobilbau bewährte Technik dar. Die Schraubenfedern und Dämpfer können als getrennte oder als kombinierte Bauelemente ausgeführt sein. Alternativ können beispielsweise auch Gasfedern und/oder Gasdämpfer verwendet werden.

Mit besonderem Vorteil sind das Federelement und/oder das Dämpfungselement derart ausgeführt, dass eine Schwingungsbewegung des Zwischenrahmens relativ zu dem Fahrzeugrahmen eine Eigenfrequenz zwischen 2 und 3 Hz aufweist. Ein Schwingen des Fahrerplatzes erweist sich für Menschen als besonders verträglich, wenn die Schwingungsfrequenz in diesem Bereich liegt. Ein Schwingen mit niedrigerer oder höherer Frequenz kann hingegen zu Irritationen des Gleichgewichtssinns, der Augen oder der inneren Organe führen.

Weiter ist es ergonomisch vorteilhaft, wenn das Federelement und/oder das Dämpfungselement derart ausgeführt sind, dass eine Schwingungsbewegung des Zwischenrahmens relativ zu dem Fahrzeugrahmen nach zwei Schwingungsperioden im Wesentlichen abgeklungen ist. Eine Schwingungsbewegung des Zwischenrahmens, die beispielsweise durch ein Überfahren einer Bodenunebenheit ausgelöst wird, ist dann nach ca. 2 Schwingungsperioden so weit abgeklungen, dass sie für den Fahrer nicht mehr spürbar ist.

Für die Schwingungsbewegung des Zwischenrahmens ist eine maximale Amplitude vorgesehen, die einen Wert zwischen 2 und 6 cm aufweist. Die maximale Amplitude ist durch Anschläge, die beispielsweise im Bereich der Führungselemente, des Federelements oder des Dämpfungselements angeordnet sein können, festgelegt.

Besondere Vorteile ergeben sich durch die erfindungsgemäße Anordnung, wenn der Schubmaststapler ein ungefedertes Fahrwerk aufweist. Dies ist bei den meisten Typen von Schubmaststaplern der Fall, deren vergleichsweise harte Bereifung für das Befahren von glatten Böden ausgelegt ist, ergeben sich besondere Anforderungen an eine Federung und Dämpfung des Fahrerplatzes, wenn gelegentlich Schwellen, Schienen oder ähnliche Fahrbahnunebenheiten überfahren werden.

Weitere Vorteile und Einzelheiten der Erfindung werden anhand des in den schematischen Figuren dargestellten Ausführungsbeispiels näher erläutert. Dabei zeigt
- Figur 1: den Fahrzeugrahmen eines erfindungsgemäßen Schubmaststaplers,
- Figur 2: den Zwischenrahmen mit Führungs-, Dämpfungs- und Federelementen und eine Verstellvorrichtung für einen Fahrersitz in perspektivischer Ansicht,
- Figur 3: den Zwischenrahmen mit Führungs-, Dämpfungs- und Federelementen und eine Verstellvorrichtung für einen Fahrersitz in einer weiteren Ansicht.

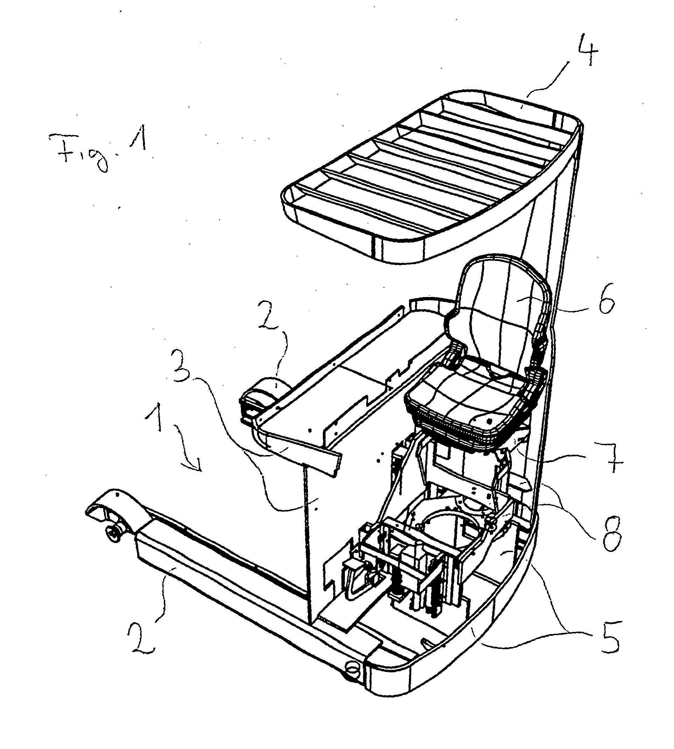

Figur 1 zeigt den Fahrzeugrahmen 1 eines erfindungsgemäßen Schubmaststaplers, der im Wesentlichen zwei Radarme 2, eine Batterieblockaufnahme 3, ein Fahrerschutzdach 4 und einen Fahrerplatzabschnitt 5 aufweist. Im Bereich des Fahrerplatzabschnitts des Fahrzeugrahmens 1 befindet sich ein Fahrersitz 6, der mittels einer Verstellvorrichtung 7 an einem Zwischenrahmen 8 befestigt ist. Der Zwischenrahmen 8 ist in vertikaler Richtung beweglich an dem Fahrzeugrahmen 1 geführt und mittels Dämpfungs- und Federelementen an dem Fahrzeugrahmen 1 abgestützt.

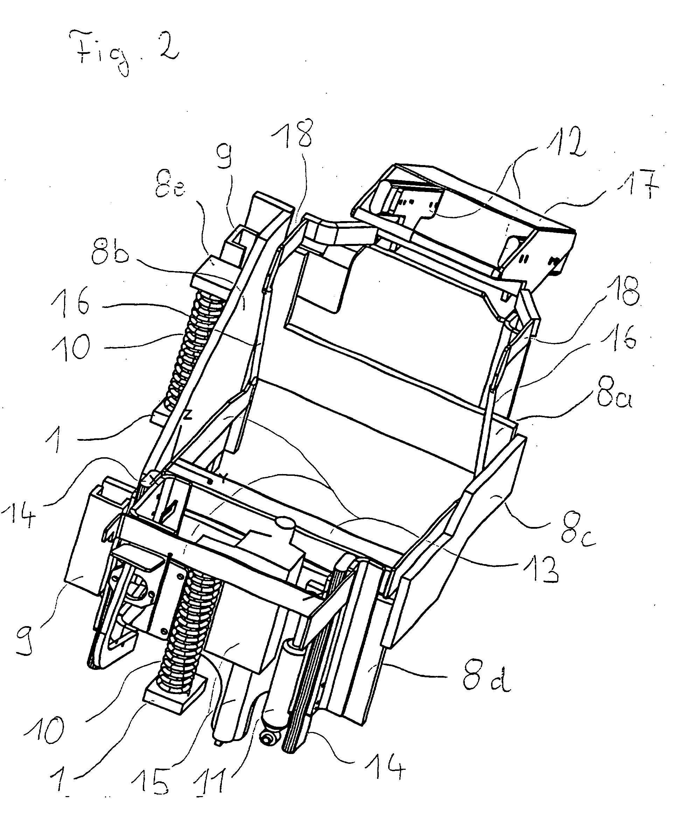

In Figur 2 ist der Zwischenrahmen 8 erkennbar, der im Wesentlichen aus einem hinteren Abschnitt 8a, einem rechten Seitenabschnitt 8b, einem linken Seitenabschnitt 8c und einem teilweise verdeckten Frontabschnitt 8d besteht. Der Zwischenrahmen 8 ist mit drei translatorischen Führungselementen 9 relativ zu dem Fahrzeugrahmen 1 in vertikaler Richtung bewegbar geführt, von denen in der vorliegenden Ansicht zwei sichtbar sind. Jedes Führungselement 9 besteht aus einem fest mit dem Fahrzeugrahmen 1 verbundenen U-förmigen Profil und mindestens einer darin geführten, an dem Zwischenrahmen 8 gelagerten Führungsrolle. Auf den Fahrzeugrahmen wirkende Stöße in Richtung der mit den Führungselementen 9 ermöglichten Bewegungsrichtung werden mittels zweier als metallische Schraubenfedern ausgeführter Federelemente 10 und mittels eines als hydraulischer Dämpfer ausgeführten Dämpfungselements 11 abgefedert bzw. gedämpft. Die Federelemente 10 stützen sich mit dem oberen Ende an zu dem Zwischenrahmen 8 gehörenden Bauteilen 8e und mit dem unteren Ende an dem Fahrzeugrahmen 1 ab. Das Dämpfungselement 11 ist kolbenstangenseitig an dem Frontabschnitt 8d des Zwischenrahmens 8 und zylinderrohrseitig an dem Fahrzeugrahmen 1 gelagert.

An dem Zwischenrahmen 8 sind zwei lineare Führungen 12 befestigt, mit denen eine Befestigungsplatte 17 für einen Fahrersitz (Pos 6, Fig. 1) relativ zu dem Zwischenrahmen 8 verschiebbar geführt ist. Im vorderen Bereich des Zwischenrahmens 8 ist an dem Zwischenrahmen 8 eine Tragstruktur 13 für eine nicht dargestellte Bodenplatte des Fahrerplatzes in vertikaler Richtung bewegbar geführt. Die Führung dieser Tragstruktur 13 erfolgt mittels zweier an dem Zwischenrahmen 8 befestigter Linearführungen 14. Die zum vertikalen Verstellen der Tragstruktur 13 der Bodenplatte erforderliche Kraft wird mittels eines elektrischen Stellglieds 15 erzeugt, das sich einerseits an dem Zwischenrahmen 8 und andererseits an der Tragstruktur 13 abstützt. Die Verstellbewegung der Befestigungsplatte 17 des Fahrersitzes (Pos 6, Fig. 1) ist zwangsweise an die Verstellbewegung der Tragstruktur 13 der Bodenplatte gekoppelt. Hierzu sind zwei druckbelastete Gelenkstangen 16 vorgesehen, welche die Tragstruktur 13 mit zwei starr mit der Befestigungsplatte 17 verbundenen Armen 18 verbinden. Damit wird eine vertikale Bewegung der Tragstruktur 13 auf die Befestigungsplatte 7 übertragen, welche dabei entlang der Führungen 12 verschoben wird.

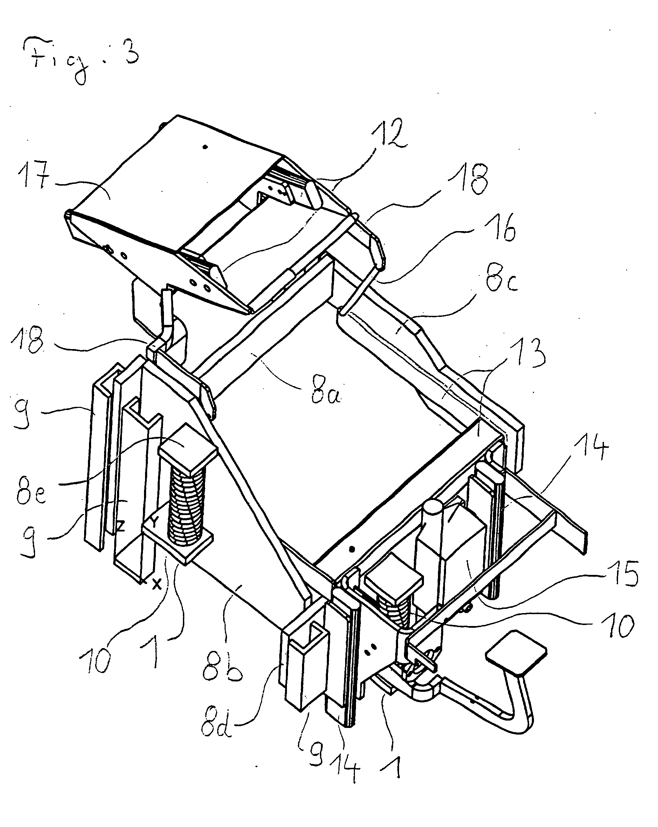

Figur 3 zeigt die Anordnung gemäß Figur 2 in anderer Ansicht. Zu erkennen sind hier insbesondere die drei Führungselemente 9, mit denen der Zwischenrahmen 8 an dem Fahrzeugrahmen 1 in vertikaler Richtung geführt ist.

Infolge dieser gedämpften und gefederten Lagerung wird die Ergonomie des Fahrerplatzes des Schubmaststaplers deutlich verbessert. Die auf den Fahrer einwirkenden Beschleunigungswerte in vertikaler Richtung können im Vergleich zu einem herkömmlichen Schubmaststapler deutlich verringert werden. Dies wird insbesondere auch dadurch erreicht, dass die Bodenplatte gemeinsam mit dem Fahrersitz an dem gefederten und gedämpften Zwischenrahmen befestigt ist.

## Patentansprüche

1. Schubmaststapler mit einem Fahrzeugrahmen (1), welcher zwei Radarme (2) und ein Fahrerschutzdach (4) umfasst, und mit einem zumindest eine Bodenplatte und einen Fahrersitz (6) umfassenden Fahrerplatz, wobei die Bodenplatte und der Fahrersitz (6) relativ zu dem Fahrzeugrahmen (1) gefedert sind, **dadurch gekennzeichnet, dass** die Bodenplatte und der Fahrersitz (6) an einem Zwischenrahmen (8) befestigt sind, der relativ zu dem Fahrzeugrahmen (1) bewegbar gelagert ist, wobei mindestens ein Federelement (10) und/oder mindestens ein Dämpfungselement (11) vorgesehen ist, das den Zwischenrahmen (8) mit dem Fahrzeugrahmen (1) verbindet.

2. Schubmaststapler nach Anspruch 1, **dadurch gekennzeichnet, dass** der Fahrersitz (6) gefedert an dem Zwischenrahmen (8) gelagert ist.

3. Schubmaststapler nach Anspruch 1 oder 2, **dadurch gekennzeichnet, dass** mindestens ein translatorisches Führungselement (9) vorgesehen ist, das den Zwischenrahmen (8) mit dem Fahrzeugrahmen (1) verbindet.

4. Schubmaststapler nach einem der Ansprüche 1 bis 3, **dadurch gekennzeichnet, dass** der Zwischenrahmen (8) relativ zu dem Fahrzeugrahmen (1) in genau einer Richtung translatorisch bewegbar ist.

5. Schubmaststapler nach Anspruch 4, **dadurch gekennzeichnet, dass** der Zwischenrahmen (8) relativ zu dem Fahrzeugrahmen (1) ausschließlich in vertikaler Richtung bewegbar ist.

6. Schubmaststapler nach einem der Ansprüche 3 bis 5, **dadurch gekennzeichnet, dass** als translatorisches Führungselement (9) mindestens eine in einem Profil geführte Rolle vorgesehen ist.

7. Schubmaststapler nach Anspruch 6, **dadurch gekennzeichnet, dass** drei zueinander parallel angeordnete Profile vorgesehen sind, wobei in jedem Profil mindestens eine Rolle geführt ist.

8. Schubmaststapler nach einem der Ansprüche 1 bis 7, **dadurch gekennzeichnet, dass** die Position des Fahrersitzes (6) und/oder der Bodenplatte relativ zu dem Zwischenrahmen (8) verstellbar ist.

9. Schubmaststapler nach einem der Ansprüche 1 bis 8, **dadurch gekennzeichnet, dass** die Position des Fahrersitzes (6) und der Bodenplatte relativ zu dem Zwischenrahmen (8) verstellbar ist, wobei eine Höhenverstellung der Bodenplatte an ein Verschieben des Fahrersitzes (6) gekoppelt ist.

10. Schubmaststapler nach Anspruch 8 oder 9, **dadurch gekennzeichnet, dass** zum Verstellen des Fahrersitzes (6) eine von vorne-oben nach hinten-unten gerichtete Führung (12) vorgesehen ist.

11. Schubmaststapler nach einem der Ansprüche 1 bis 10, **dadurch gekennzeichnet, dass** als Federelement (10) mindestens eine metallische Schraubenfeder vorgesehen ist.

12. Schubmaststapler nach einem der Ansprüche 1 bis 11, **dadurch gekennzeichnet, dass** als Dämpfungselement (11) mindestens ein hydraulischer Dämpfer vorgesehen ist.

13. Schubmaststapler nach einem der Ansprüche 1 bis 12, **dadurch gekennzeichnet, dass** das Federelement (10) und/oder das Dämpfungselement (11) derart ausgeführt sind, dass eine Schwingungsbewegung des Zwischenrahmens (8) relativ zu dem Fahrzeugrahmen (1) eine Eigenfrequenz zwischen 2 und 3 Hz aufweist.

14. Schubmaststapler nach einem der Ansprüche 1 bis 13, **dadurch gekennzeichnet, dass** das Federelement (10) und/oder das Dämpfungselement (11) derart ausgeführt sind, dass eine Schwingungsbewegung des Zwischenrahmens (8) relativ zu dem Fahrzeugrahmen (1) nach zwei Schwingungsperioden im Wesentlichen abgeklungen ist.

15. Schubmaststapler nach einem der Ansprüche 1 bis 14, **dadurch gekennzeichnet, dass** für die Schwingungsbewegung des Zwischenrahmens (8) eine maximale Amplitude vorgesehen ist, die einen Wert zwischen 2 und 6 cm aufweist.

16. Schubmaststapler nach einem der Ansprüche 1 bis 15, **dadurch gekennzeichnet, dass** der Schubmaststapler ein ungefedertes Fahrwerk aufweist.

## Claims

1. Thrust mast fork-lift truck comprising a vehicle frame (1), which comprises two wheel arms (2) and a driver's protection roof (4), and comprising a driver's station comprising at least a base plate and a driver's seat (6), the base plate and the driver's seat (6) being sprung relative to the vehicle frame (1), **characterised in that** the base plate and the driver's seat (6) are fastened to an intermediate frame (8), which is movably mounted relative to the vehicle frame (1), at least one spring element (10) and/or at least one damping element (11) being provided, which connects the intermediate frame (8) to the vehicle frame (1).

2. Thrust mast fork-lift truck according to claim 1, **characterised in that** the driver's seat (6) is mounted in a sprung manner on the intermediate frame (8).

3. Thrust mast fork-lift truck according to claim 1 or 2, **characterised in that** at least one translatory guide element (9) is provided, which connects the intermediate frame (8) to the vehicle frame (1).

4. Thrust mast fork-lift truck according to any one of claims 1 to 3, **characterised in that** the intermediate frame (8) is movable in a translatory manner relative to the vehicle frame (1) in precisely one direction.

5. Thrust mast fork-lift truck according to claim 1, **characterised in that** the intermediate frame (8) is movable relative to the vehicle frame (1) exclusively in the vertical direction.

6. Thrust mast fork-lift truck according to any one of claims 3 to 5, **characterised in that** at least one roller guided in a profile is provided as the translatory guide element (9).

7. Thrust mast fork-lift truck according to claim 6, **characterised in that** three profiles arranged parallel to one another are provided, at least one roller being guided in each profile.

8. Thrust mast fork-lift truck according to any one of claims 1 to 7, **characterised in that** the position of the driver's seat (6) and/or the base plate is adjustable relative to the intermediate frame (8).

9. Thrust mast fork-lift truck according to any one of claims 1 to 8, **characterised in that** the position of the driver's seat (6) and the base plate is adjustable relative to the intermediate frame (8), a height adjustment of the base plate being coupled to a displacement of the driver's seat (6).

10. Thrust mast fork-lift truck according to claim 8 or 9, **characterised in that** a guide (12) directed from front-top to rear-bottom is provided to adjust the driver's seat (6).

11. Thrust mast fork-lift truck according to any one of claims 1 to 10, **characterised in that** at least one metallic helical spring is provided as the spring element (10).

12. Thrust mast fork-lift truck according to any one of claims 1 to 11, **characterised in that** at least one hydraulic damper is provided as the damping element (11).

13. Thrust mast fork-lift truck according to any one of claims 1 to 12, **characterised in that** the spring element (10) and/or the damping element (11) are designed in such a way that a vibrational movement of the intermediate frame (8) relative to the vehicle frame (1) has a natural frequency between 2 and 3 Hz.

14. Thrust mast fork-lift truck according to any one of claims 1 to 13, **characterised in that** the spring element (10) and/or the damping element (11) are designed in such a way that a vibrational movement of the intermediate frame (8) relative to the vehicle frame (1) has substantially died away after two vibration periods.

15. Thrust mast fork-lift truck according to any one of claims 1 to 14, **characterised in that** a maximum amplitude, which has a value between 2 and 6 cm, is provided for the vibrational movement of the intermediate frame (8).

16. Thrust mast fork-lift truck according to any one of claims 1 to 15, **characterised in that** the thrust mast fork-lift truck has a non-sprung chassis.

## Revendications

1. Chariot élévateur à fourche rétractable comportant un cadre (1) muni de deux bras à roues (2) et d'un toit de protection du conducteur (4) ainsi qu'un emplacement de conducteur avec une plaque de plancher et un siège de conducteur (6),
la plaque de plancher et le siège de conducteur (6) étant suspendus par rapport au cadre (1) du véhicule,
**caractérisé en ce que**
la plaque de plancher et le siège de conducteur (6) sont fixés à un cadre intermédiaire (8) mobile par rapport au cadre (1) du véhicule,
au moins un élément de ressort (10) et/ou au moins un élément amortisseur (11) reliant le cadre intermédiaire (8) au cadre (1) du véhicule.

2. Chariot élévateur à fourche rétractable selon la revendication 1,
**caractérisé en ce que**
le siège de conducteur (6) est monté suspendu au cadre intermédiaire (8).

3. Chariot élévateur à fourche rétractable selon la revendication 1 ou 2,
**caractérisé par**
au moins un élément de guidage en translation (9) reliant le cadre intermédiaire (8) au cadre (1) du véhicule.

4. Chariot élévateur à fourche rétractable selon l'une des revendications 1 à 3,
**caractérisé en ce que**
le cadre intermédiaire (8) est mobile en translation précisément dans une direction par rapport au cadre (1) du véhicule.

5. Chariot élévateur à fourche rétractable selon la revendication 4,
**caractérisé en ce que**
le cadre intermédiaire (8) est mobile par rapport au cadre (1) du véhicule exclusivement dans la direction verticale.

6. Chariot élévateur à fourche rétractable selon l'une des revendications 3 à 5,
**caractérisé en ce que**
l'élément de guidage en translation (9) comporte au moins un galet guidé dans un profil.

7. Chariot élévateur à fourche rétractable selon la revendication 6,
**caractérisé par**
trois profils parallèles et chaque profil guidant au moins un galet.

8. Chariot élévateur à fourche rétractable selon l'une des revendications 1 à 7,
**caractérisé en ce que**
la position du siège de conducteur (6) et/ou de la plaque de plancher sont réglables par rapport au cadre intermédiaire (8).

9. Chariot élévateur à fourche rétractable selon l'une des revendications 1 à 8,
**caractérisé en ce que**
la position du siège de conducteur (6) et celle de la plaque de plancher sont réglables par rapport au cadre intermédiaire (8), le réglage en hauteur de la plaque de plancher étant couplé à un coulissement du siège de conducteur (6).

10. Chariot élévateur à fourche rétractable selon les revendications 8 ou 9,
**caractérisé par**
un moyen de guidage (12) dirigé de l'avant en haut vers l'arrière en bas pour régler le siège de conducteur (6).

11. Chariot élévateur à fourche rétractable selon l'une des revendications 1 à 10,
**caractérisé en ce que**
l'élément de ressort (10) est au moins un ressort hélicoïdal métallique.

12. Chariot élévateur à fourche rétractable selon l'une des revendications 1 à 11,
**caractérisé en ce que**
l'élément d'amortissement (11) comporte au moins un amortisseur hydraulique.

13. Chariot élévateur à fourche rétractable selon l'une des revendications 1 à 12,
**caractérisé en ce que**
l'élément de ressort (10) et/ou l'élément d'amortissement (11) sont réalisés pour qu'un mouvement oscillant du cadre intermédiaire (8) par rapport au cadre (1) du véhicule présente une fréquence propre comprise entre 2 et 3 Hz.

14. Chariot élévateur à fourche rétractable selon l'une des revendications 1 à 13,
**caractérisé en ce que**
l'élément de ressort (10) et/ou l'élément amortisseur (11) sont réalisés pour qu'un mouvement oscillant du cadre intermédiaire (8) par rapport au cadre (1) du véhicule soit pratiquement amorti après deux périodes d'oscillations.

15. Chariot élévateur à fourche rétractable selon l'une des revendications 1 à 14,
**caractérisé en ce que**
le mouvement d'oscillation du cadre intermédiaire (8) a une amplitude maximale correspondant à une valeur comprise entre 2 et 6 cm.

16. Chariot élévateur à fourche rétractable selon l'une des revendications 1 à 15,
**caractérisé en ce qu'**
il comporte un cadre non suspendu.
